(19) Europäisches Patentamt / European Patent Office / Office européen des brevets

(11) **EP 2 678 933 B1**

(12) **EUROPÄISCHE PATENTSCHRIFT**

(45) Veröffentlichungstag und Bekanntmachung des Hinweises auf die Patenterteilung:
**30.08.2017 Patentblatt 2017/35**

(51) Int Cl.:
***H02M 7/483*** (2007.01)  ***H02P 27/14*** (2006.01)

(21) Anmeldenummer: **12715548.9**

(22) Anmeldetag: **30.03.2012**

(86) Internationale Anmeldenummer:
**PCT/EP2012/055890**

(87) Internationale Veröffentlichungsnummer:
**WO 2012/131073 (04.10.2012 Gazette 2012/40)**

(54) **VERFAHREN ZUR ERZEUGUNG EINER AUSGANGSSPANNUNG AN EINEM MODULAREN MEHRSTUFIGEM STROMRICHTER UND ANORDNUNG ZUR DURCHFÜHRUNG DES VERFAHRENS**

METHOD FOR PRODUCING AN OUTPUT VOLTAGE AT A MODULER MULTILEVEL CONVERTER AND ASSEMBLY FOR PERFORMING THE METHOD

PROCÉDÉ POUR PRODUIRE UNE TENSION DE SORTIE DANS UN CONVERTISSEUR MODULAIRE MULTINIVEAUX ET SYSTÈME POUR METTRE EN OEUVRE LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2011 DE 102011006631**

(43) Veröffentlichungstag der Anmeldung:
**01.01.2014 Patentblatt 2014/01**

(73) Patentinhaber: **Siemens Aktiengesellschaft
80333 München (DE)**

(72) Erfinder:
• **BAERNKLAU, Hans
01159 Dresden (DE)**
• **BERNET, Steffen
01454 Radeberg (OT Ullersdorf) (DE)**
• **GENSIOR, Albrecht
01277 Dresden (DE)**
• **WEBER, Jens
01099 Dresden (DE)**

(56) Entgegenhaltungen:
**EP-A1- 1 414 145    US-A1- 2002 175 644**

• **KORN A J ET AL: "Low output frequency operation of the Modular Multi-Level Converter", ENERGY CONVERSION CONGRESS AND EXPOSITION (ECCE), 2010 IEEE, IEEE, PISCATAWAY, NJ, USA, 12. September 2010 (2010-09-12), Seiten 3993-3997, XP031787020, ISBN: 978-1-4244-5286-6 in der Anmeldung erwähnt**

**Beschreibung**

Die Erfindung betrifft ein Verfahren zur Erzeugung einer frequenzveränderlichen Ausgangsspannung $u_a$ mittels eines Modularen Multilevel-Stromrichters (M2C), wobei der Stromrichter durch Zu- und Abschalten von Submodulen eine durch diskrete Spannungsstufen angenäherte sinusförmige Wechselspannung mit einer ersten Kreisfrequenz $\omega_0$, welche zwischen einer Nullfrequenz $\omega_{0,min}$ und einer zweiten Kreisfrequenz $\omega_{0,max}$ liegt, aus einer Eingangsspannung $U_d$ erzeugt.

Die Erfindung betrifft auch eine Anordnung zur Durchführung des Verfahrens zur Erzeugung einer frequenz-veränderlichen Ausgangsspannung $u_a$ aus einer Eingangsspannung $U_d$ mittels eines Modularen Multilevel-Stromrichters (M2C), bei welchem zur Erzeugung einer Ausgangsspannung Zweige, bestehend aus je einer Reihenschaltung von mehreren Submodulen, angeordnet sind.

Multilevel-Stromrichter können an ihren Ausgangsklemmen Spannungen mit geringem Oberschwingungsgehalt, welche einem gewünschten sinusförmigen Verlauf der Spannung sehr nahe kommen, erzeugen.

Derzeit sind mehrere Multilevel-Topologien wie 3-Level-NPC, Flying-Capacitor-Converter, Cascaded-H-Bridge-Converter wie in Bin Wu, "High-Power Converters And AC Drives", John Wiley & Sons Inc., Hoboken, New Jersey, USA, 2006 offenbart, bekannt.

Eine relativ neue Topologie ist der Modulare Multilevel-Stromrichter (M2C, M2LC), wie er in R. Marquardt, A. Lesnicar, J. Hildinger, "Modulares Stromrichterkonzept für Netzkupplungsanwendung bei hohen Spannungen", ETG-Fachtagung, Bad Nauheim, 2002 und in R. Marquardt, A. Lesnicar, "New Concept for High Voltage Modular Multilevel Converter", Proc. of IEEE-Power Electronics Specialists Conference (PESC), Aachen, 2004 beschrieben ist.

Dieser ist derzeit Gegenstand von Anwendung und Forschung. Wesentliches Merkmal des M2Cs ist die Reihenschaltung von mehreren Zellen, den sogenannten Submodulen.

Für die Funktionsweise ist es notwendig, dass jede dieser Zellen einen Energiespeicher, welcher als Gleichspannungskondensator realisiert werden kann, besitzt.

Beim Betrieb von Multilevel-Stromrichter nach dem Stand der Technik sind die nachfolgend aufgeführten Bedingungen zu beachten.

Da die Energiespeicher nicht durch externe Beschaltungsnetzwerke, wie z. B. durch potentialgetrennte Gleichrichter geladen oder entladen werden, ist der Zeitverlauf der gespeicherten Energie stark vom Betrieb des Umrichters und/oder der Last abhängig. So hängt die auslegungsrelevante Energieschwankung nach [R. Marqardt, ... "Modulares Stromrichterkonzept für Netzkupplungsanwendungen bei hohen Spannungen", ...] beim sog. "kreisstromfreien Betrieb" indirekt proportional von der Grundschwingungsfrequenz des Laststromes ab.

Mit Kreisströmen werden hier Stromkomponenten in den Zweigen des Umrichters genannt, welche weder über den Anschluss am DC-Zwischenkreis, noch über die Last fließen. Der "kreisstromfreie Betrieb" zeichnet sich also dadurch aus, dass die Ströme in den Zweigen des Umrichters nur Komponenten enthalten, welche über den DC-Zwischenkreis und die Last fließen.

Demnach ist ein "kreisstromfreier Betrieb" bei "kleinen" Grundschwingungsfrequenzen nicht, oder nur unter Einschränkungen möglich. Dies ist insbesondere beim Betrieb von elektrischen Maschinen zu beachten.

Insbesondere muss bei Motor- oder Generatoranwendungen ein sehr schnelles Anfahren der Maschine auf die Auslegungsfrequenz $f_N$ realisiert werden, um den Energieeintrag in die Submodul-Kondensatoren zu beschränken. Somit kommt es zu weiteren Einschränkungen des Anwendungsbereichs auf Grund der Eigenschaften des angetriebenen mechanischen Systems.

Begrenzung der Arbeitsfrequenz $f_0$ des Umrichters auf $f_{0,Min} < f_0 < f_{0,Max}$. Bei Maschinenanwendungen bedeutet dies "hartes" Anfahren der Maschine aus dem Stillstand.

Eine Möglichkeit zur Realisierung des schnellen Anfahrens ist, die Arbeitsfrequenz des Umrichters auf $0 < f_{0,Min} <= f_0 <= f_{0,Max}$ zu begrenzen. Insbesondere bedeutet dies bei Asynchronmaschinen "hartes" Anfahren aus dem Stillstand auf

$$f_{Mech} = \frac{f_{0,Min}}{p} * (1 - s_x)$$

Hierbei stellt p die Polpaarzahl, $f_{Mech}$ die mechanische Drehzahl der Maschine und $s_x$ den Schlupf dar.

Somit ist kein stationärer Betrieb bei Frequenzen $f_0 < f_{0,Min}$ möglich, also kein Gleichstrombremsen und kein Sanftanlauf aus dem Stillstand. Beachtet werden muss das ein nachgeschaltetes mechanisches System nicht durch eventuell auftretende Drehmomentstöße beschädigt wird.

Eine weitere Möglichkeit zur Reduzierung der Energieschwankungen ist eine Anpassung der Amplitude des Laststromes in Abhängigkeit der Frequenz $f_0$, $\hat{i}_L = g(f_0)$, mit dem Ziel, den Energieeintrag in die Submodulkondensatoren zu beschränken. Somit kommt es zu einer Reduktion der Leistung des M2Cs, bei Antrieben entspricht dies einer Reduktion des Drehmoments. Bei Netzanwendungen entspricht dies einer Reduktion der zu übertragenen Leistung.

Weiterhin muss die Beeinflussung des Energieeintrages in die Submodulkondensatoren durch zusätzliche Stromkomponenten im Umrichter beachtet werden, welche nicht über den DC-Anschluss, bzw. die Last fließen. Häufige Folgen dieser Beeinflussung sind zusätzliche Leit- und Schaltverluste in den Halbleiterbauelementen, zusätzliche Verluste innerhalb des Umrichters an den ohmschen Widerständen, Erhöhung der Siliziumfläche der Halbleiterbauelemente sowie eine Verringerung des Wirkungsgrades.

Eine Beeinflussung des Energieeintrags in die Kondensatoren der Submodule durch Variation der Differenz aus der Summe der Klemmenspannung der Submodule oberhalb der Anschlussklemmen der Last oder des Netzes und der Summe der Klemmenspannung der Submodule unterhalb. Diese Variation entspricht einer Modulation der Gleichtaktspannung.

Diese Maßnahme ist nicht bei allen Systemen möglich. Falls möglich, so ist die Modulation der mittleren Spannungsaussteuerung durch technische Anforderungen der Anwendung oft eingeschränkt. Beispiele hierfür sind Isolationsanforderungen. Durch die Modulation der mittleren Spannungsaussteuerung der Submodule kommt es zu einer Änderung der Schaltverluste.

Durch geeignete Kombinationen der Beeinflussung des Energieeintrages durch Kreisströme und Variation der Gleichtaktspannung ist ein Betrieb des Stromrichters nach [Korn, Winkelnkemperg, "Low output frequ..."] auch bei $f_0 \ll f_N$ möglich. Insbesondere ist mit dem genannten Verfahren ein Betrieb bei $f_0 = 0$ Hz möglich.

Ausführungen hierfür finden sich in A. J. Korn, M. Winkelnkemper, and P. Steimer, "Low output frequency operation of the modular multi-level converter", in Energy Conversion Congress and Exposition (ECCE), 2010 IEEE, Sept. 2010, pp. 3993 3997.

Eine weitere Möglichkeit ist auch die Auslegung der Submodulkondensatoren auf eine minimale Dauerbetriebsfrequenz $f_{0,Min}$. Eine Überdimensionierung bzgl. der Nennfrequenz $f_N$, erhöht die Kosten. Außerdem erhöht die zusätzlich gespeicherte Energie im Umrichter den Aufwand zur Erfüllung von Sicherheitsanforderungen.

Zusammenfassend gilt:

- Der Betrieb eines Moduleren-Multilevel-Stromrichters (M2C) für $f_0 < f_N$ bei Nennstrom des Umrichters führt zu steigendem Aufwand an Kondensatoren und/oder Leistungshalbleitern und/oder zusätzlichen Anforderungen an die Last, beispielsweise die Isolation des Sternpunktes einer Maschine betreffend.

- Der Betrieb für $f_0 < f_N$ bei reduziertem Strom schränkt die Kenndaten des Umrichters deutlich ein, so dass mögliche Anwendungsgebiete drastisch reduziert werden. So ist beispielsweise ein 4-Quadranten-Antrieb, in dem im gesamten Bereich für das Drehmoment der Maschine $M = M_N$ gefordert wird, nicht möglich.

Der Erfindung liegt somit die Aufgabe zugrunde, ein Verfahren zur Erzeugung einer Ausgangsspannung und eine Anordnung zur Durchführung des Verfahrens anzugeben, womit der Kondensator- und Halbleiteraufwand und hiermit verbundene Kosten bei einem gegebenem Laststrom reduziert werden, eine Vereinfachung des Steuerungs- und Regelungsaufwandes für den Betriebsbereich von $\omega_1 < \omega_0 < \omega_2$ erreicht wird und die Verluste im Stromrichter verringert werden.

Weiterhin geht es um eine Erschließung zusätzlicher Anwendungsbereiche des Umrichters, beispielsweise für einen Dauerbetrieb bei kleinen Frequenzen oder dem Betrieb einer elektrischen Maschine mit konstantem Drehmoment über einen weiten Drehzahlbereich ohne die zuvor genannten Maßnahmen.

Gemäß der Erfindung wird die Aufgabe bei einem Verfahren der eingangs genannten Art dadurch gelöst, dass die Eingangsspannung $U_d$ in Abhängigkeit von der Kreisfrequenz $\omega_0$ im Bereich zwischen einer Kreisfrequenz $\omega_1$, welche gleich oder größer als die Nullfrequenz $\omega_{0,min}$ ist, und einer Kreisfrequenz $\omega_2$, zur Verringerung eines Kondensatoraufwands im Stromrichter, derart gesteuert oder geregelt wird, dass sie mit ansteigender Frequenz ansteigt.

Hierbei ist $\omega = 2\pi f$, insbesondere gilt $\omega_0 = 2\pi f_0$.

Dabei liegt die Kreisfrequenz $\omega_0$, welche die Grundschwingungs- oder Arbeitsfrequenz des Stromrichters abbildet, im Bereich zwischen der unteren Begrenzung des Frequenzbereichs $\omega_{0,min}$ und der zweiten Kreisfrequenz $\omega_{0,max}$, welche die obere Begrenzung des Frequenzbereichs markiert.

Betrachtet wird der Betrag der Kreisfrequenz.

Die Minimalfrequenz $\omega_{0,min}$ stellt somit die kleinste realisierbare Frequenz beim Betrieb des Stromrichters dar und ist größer oder gleich 0.

$$0 \leq \omega_{0,min} \leq \omega_0 \leq \omega_{0,max}$$

Bei der Steuerung- oder Regelung der DC-Spannung $U_d$ am Anschlusspunkt des Umrichters in Abhängigkeit der Grundschwingungskreisfrequenz $\omega_0$ erfolg diese Steuerung oder Regelung zwischen der unteren Minimalfrequenz $\omega_1$ und der zweiten Kreisfrequenz $\omega_2$.

$$\omega_1 \leq \omega_0 \leq \omega_2$$

Erfindungsgemäß ist eine Variation der DC-Spannung $U_d$ am Gleichspannungszwischenkreis vorgesehen in Abhängigkeit der Grundschwingungskreisfrequenz $\omega_0$ oder der Grundschwingungsfrequenz $f_0$ des Stromrichters unter Beachtung der Laststromamplitude $\hat{I}_L$ und/oder der Klemmenspannung. Mittels dieser Variation der DC Spannung $U_d$ wird der Energieeintrag in die Submodulkondensatoren des M2Cs erfindungsgemäß beeinflusst.

Eine zusätzliche Modulation der Gleichtaktspannung und eine Energieverschiebung durch zusätzliche Stromkomponenten sind optional möglich. Die Variation der DC Spannung $U_d$ im Zwischenkreis bedingt eine Schaltung, welche eine variable Spannung $U_d$ bereitstellen kann. Eine Auswahl derartiger Schaltungen ist im Ausführungsbeispiel weiter unten angegeben.

Die Erfindung betrifft auch ein Verfahren zur Erzeugung einer Spannung $U_d$ im DC-Zwischenkreis aus einer frequenzveränderlichen Eingangsspannung $u_a$ mittels des Modularen Multilevel-Stromrichters (M2C).

In einer Ausgestaltung der Erfindung ist vorgesehen, dass das Zu- und Abschalten mindestens eines Submoduls stufenweise erfolgt.

In einer anderen Ausgestaltung ist vorgesehen, dass das Zu- und Abschalten mindestens eines Submoduls durch PWM-Modulation gesteuert erfolgt.

Eine Form der Steuerung der Submodule besteht darin ein oder mehrere Module mittels eines PWM-Steuersignals (Puls-Weiten-Modulation) anzusteuern.

In einer weiteren Ausgestaltung der Erfindung ist vorgesehen, dass die Spannung $U_d$ in Abhängigkeit der Kreisfrequenz $\omega_0$ monoton ansteigt.

In einer besonderen Ausführung der Erfindung ist vorgesehen, dass die Spannung $U_d$ in Abhängigkeit der Kreisfrequenz $\omega_0$ zumindest in einem Intervall linear ansteigt.

In einer Ausführungsform der Erfindung ist vorgesehen, dass die Eingangsspannung $U_d$ in Abhängigkeit von der Kreisfrequenz $\omega_0$ zumindest in einem Intervall nichtlinear ansteigt.

Gemäß der Erfindung kann der Spannungsverlauf der Spannung $U_d$ in Abhängigkeit der Kreisfrequenz $\omega_0$ monoton ansteigen. Somit liegt nicht zwingend eine lineare Abhängigkeit zwischen $U_d$ und $\omega_0$ vor, die Spannung $U_d$ behält in Abhängigkeit von $\omega_0$ entweder ihren Wert bei oder wird größer.

Der Spannungsverlauf kann aber auch zumindest in einem zu betrachtenden Intervall einen linearen Anstieg aufweisen.

In einer Ausführungsvariante der Erfindung ist vorgesehen, dass die Eingangsspannung $U_d$ in zusätzlicher Abhängigkeit von einem Laststrom und/oder einer Klemmenspannung oder Lastspannung des M2Cs und/oder einem Drehmoment einer mit der Ausgangsspannung $u_a$ angesteuerten Maschine gesteuert oder geregelt wird.

Neben der Abhängigkeit der Eingangsspannung $U_d$ von der Kreisfrequenz sind weitere Abhängigkeiten möglich, beispielsweise von einem Laststrom oder einer Klemmenspannung einer anzusteuernden Maschine. Auch besteht die Möglichkeit ein gefordertes Drehmoment der Maschine bei der Erzeugung der Spannung $U_d$ zu beachten.

In einer Variante der Erfindung ist vorgesehen, dass die Eingangsspannung $U_d$ in zusätzlicher Abhängigkeit von einer Modulation der Gleichtaktspannung der Last gesteuert oder geregelt wird.

In einer anderen Realisierung der Erfindung ist vorgesehen, dass die Eingangsspannung $U_d$ in zusätzlicher Abhängigkeit von einer Energieverschiebung zwischen Energiespeichern des Stromrichters durch zusätzliche Stromkomponenten in den Zweigströmen des Stromrichters gesteuert wird.

Die Spannung im DC-Zwischenkreis $U_d$ wird auch als Eingangsspannung bezeichnet.

Gemäß der Erfindung wird die Aufgabe bei einer Anordnung der eingangs genannten Art dadurch gelöst, dass dem Stromrichter, zur Verringerung eines Kondensatoraufwands im Stromrichter, eingangsseitig Mittel zur Variation der Eingangsspannung $U_d$ vorgeschaltet sind.

Diese Variation der Eingangsspannung $U_d$ kann dadurch erfolgen, dass dem Stromrichter eingangsseitig ein oder mehrere Mittel zur Variation der Eingangszzz oder DC-Zwischenkreisspannung $U_d$ vorgeschaltet sind.

In einer Ausgestaltung der Erfindung ist vorgesehen, dass das Mittel zur Variation der Eingangsspannung $U_d$ aus einem stellbarem Transformator und einem Gleichrichter besteht.

Eine der einfachsten Formen ist die Nutzung von Diodengleichrichtern. Eine andere Möglichkeit besteht in der Verwendung zweier M2Cs oder anderer Stromrichter mit Spannungszwischenkreis oder Stromrichter mit Stromzwischenkreis. Diese fungieren als Gleich- oder Wechselrichter.

In einer anderen Ausgestaltung ist vorgesehen, dass das Mittel zur Variation der Eingangsspannung $U_d$ aus einem Stromrichter mit Stromzwischenkreis besteht.

In einer besonderen Ausführungsform ist vorgesehen, dass das Mittel zur Variation der Eingangsspannung $U_d$ aus einem netzseitigen Stromrichter und einem DC/DC-Wandler besteht.

In einer Weiterbildung der Erfindung ist vorgesehen, dass das Mittel zur Variation der Eingangsspannung $U_d$ aus einem Stromrichter mit Spannungszwischenkreis besteht.

In einer anderen Ausgestaltungsform ist vorgesehen, dass der Stromrichter mit Spannungszwischenkreis, aus einem 2-Level-Umrichter, 3-Level-NPC, 3-Level-Flying-Capacitor oder beliebigen Multilevel Flyingxxx Capacitorxxx Voltage Source Converter oder einem Active Neutral Point Clamped Multilevel Converter (ANPC) besteht.

Nachfolgend werden einige Stand der Technik Literaturstellen angegeben:

- Bin Wu, "High-Power Converters And AC Drives", John Wiley & Sons Inc., Hoboken, New Jersey, USA, 2006
- M. Hagiwara, H. Akagi, "PWM control and experiment of modular multilevel converters", Power Electronics Specialists Conference (PESC) 2008, PESC 2008, IEEE, page 154-161
- R. Marquardt, A. Lesnicar, J. Hildinger, "Modulares Stromrichterkonzept für Netzkupplungsanwendung bei hohen Spannungen", ETG-Fachtagung, Bad Nauheim, 2002
- R. Marquardt, A. Lesnicar, "New Concept for High Voltage - Modular Multilevel Converter", Proc. of IEEE-Power Electronics Specialists Conference (PESC), Aachen, 2004
- A. J. Korn, M. Winkelnkemper, and P. Steimer, "Low output frequency operation of the modular multi-level converter", in Energy Conversion Congress and Exposition (ECCE), 2010 IEEE, Sept. 2010, pp. 3993 3997.

Die Erfindung soll nachfolgend anhand eines Ausführungsbeispiels näher erläutert werden. In den zugehörigen Zeichnungen zeigt

Fig. 1 eine schaltungstechnische Realisierung eines Submoduls eines M2Cs aus dem Stand der Technik,

Fig. 2 einen möglichen Schaltungsaufbau des M2Cs mit N Submodulen pro Zweig aus dem Stand der Technik,

Fig. 3a eine Darstellung der prinzipiellen Abhängigkeit der Spannung $U_d$ von $\omega_0$,

Fig. 3b eine Darstellung der prinzipiellen Abhängigkeit der Spannung $\hat{U}_{LN}$ von $\omega_0$,

Fig. 4 ein Schaltungsbeispiel zur Variation der Spannung $U_d$. (Last: Motor/Generator (Asynchronmaschine, Synchronmaschine,...)/Drehstromnetz) - Schaltungskombination aus (evtl. stufig) stellbarem Transformator, Diodengleichrichter und M2C,

Fig. 5 ein weiteres Schaltungsbeispiel zur Variation der Spannung $U_d$ mit einer Schaltungskombination aus CSR (current-source-rectifier) und M2C,

Fig. 6 ein drittes Schaltungsbeispiel zur Variation der Spannung $U_d$ mit einer Schaltungskombination, bestehend aus einem netzseitigen Stromrichter NSR, einem DC/DC Wandler und einem M2C und

Fig. 7 ein Schematische Darstellung der Ausgangsspannung des Umrichters (Leiter-Sternpunktspannung) in Abhängigkeit der Spannung $U_d$; es erfolgt keine PWM-Modulation der Submodule

Für den M2C sind verschieden Regelungs- und Steuerungsverfahren, wie beispielsweise in M. Hagiwara, H. Akagi, "PWM control and experiment of modular multilevel converters", Power Electronics Specialists Conference (PESC) 2008, PESC 2008, IEEE, page 154-161 beschrieben, bekannt, welche Auswirkung auf die Energieschwankungen in den Submodulkondensatoren haben. Neben den implementierten Steuer- bzw. Regelungsverfahren hat auch die Betriebsart des Stromrichters eine entscheidende Auswirkung auf die Energieschwankung. Aus diesem Grund werden die wesentlichen Abhängigkeiten der Energieschwankungen exemplarisch für ein Verfahren erläutert, sowie der Einfluss der Spannung $U_d$ gezeigt.

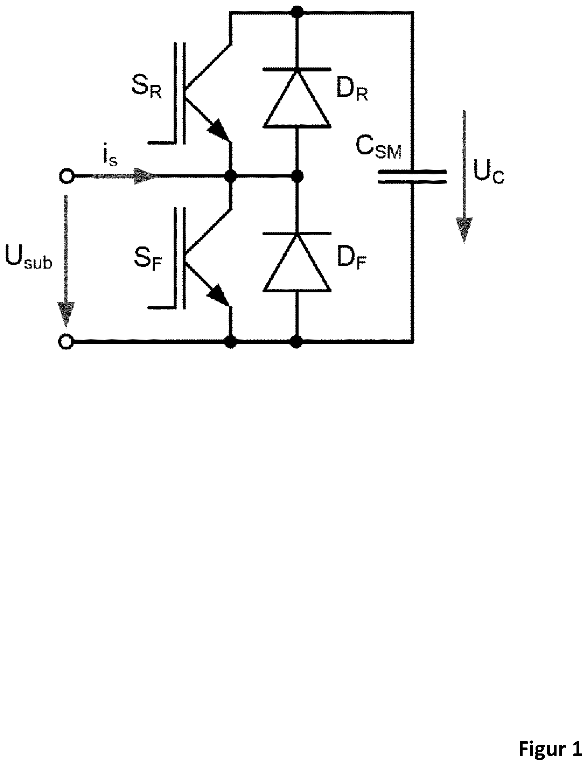

Der Aufbau einer in einer Reihenschaltung angeordneten Zelle oder eines sogenannten Submoduls eines M2Cs ist in der Figur 1 dargestellt, wobei auch andere Schaltungsvarianten möglich sind.

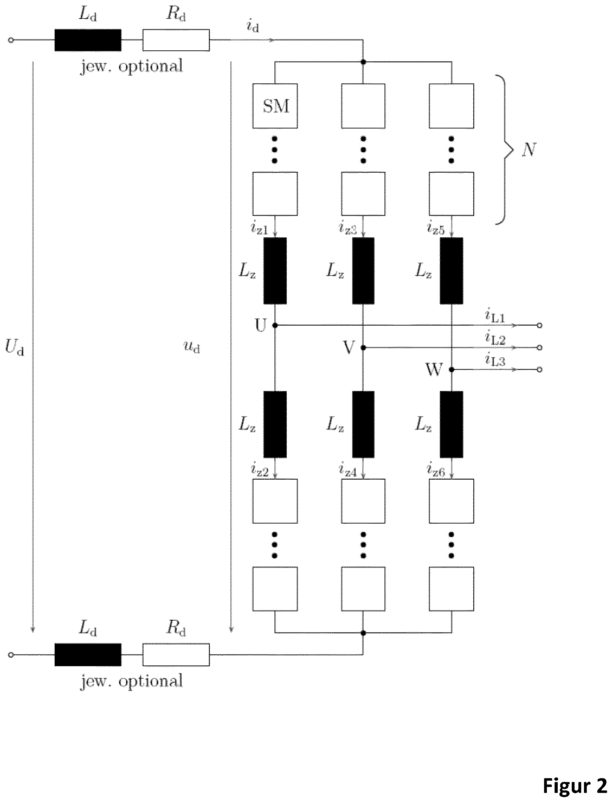

In der Figur 2 ist der Schaltungsaufbau eines M2Cs beispielsweise zur Erzeugung eines dreiphasigen Spannungssystems an den Klemmen U, V, W gegeben. Die Aussagen gelten jedoch für beliebige Phasenanzahlen $m, m \in \{1,2,3,...\}$. Für die Funktionsweise wichtig sind die Zweigdrosseln Lz, um einen Energieausgleich der Submodule des Umrichters im Moment des Schaltens einer Zelle zu vermeiden. Dabei können die Zweigdrosseln einer Phase (U, V, W) magnetisch verkoppelt sein. Eventuelle Widerstände sind in Figur 2 nicht eingezeichnet. Die Spannung $U_d$ wird beispielsweise durch einen netzseitigen Stromrichter (passive-front-end (PFE) oder active-front-end (AFE)) bereitgestellt und kann durch Kondensatoren im Gleichspannungszwischenkreis geglättet sein.

Bekannte Kombinationen des M2Cs sind

- M2C mit Diodenbrücke (PFE)

- M2C mit M2C (AFE)

- M2C mit 3L-NPC-VSC als AFE,

auch andere Varianten sind möglich. Besonders vorteilhaft an der Schaltung des M2C sind folgende Eigenschaften

- Hohe Verfügbarkeit durch Redundanz

- Streng modularer Aufbau

- Oberschwingungsarme Ausgangsspannung, Qualität der Ausgangsspannung kann durch Anzahl der Submodule erhöht werden

- Einfaches Anpassen an verschiedene Leistungen und Spannungen

- Beherrschung kurzzeitiger Netzausfälle

- Sicherer Start aus spannungslosem Zustand ("black start")

- Netzanwendungen: Inselnetzbetrieb möglich

- Netzanwendungen: Geringer, bzw. kein Filteraufwand

- Maschinenanwendungen: Bel. Maschinentypen (Asynchron-, Synchron-,...) möglich

- Filterloser Betrieb bei Standardmotoren

- DC Bus Konfigurationen möglich

- Standardtransformator oder transformatorlos möglich.

Die wesentlichen Nachteile der Schaltung sind nachfolgend zusammengefasst:

- Hoher Aufwand an kapazitiven Energiespeichern

- Hoher Aufwand zur Steuerung und / oder Regelung

- Abhängigkeit der Energieschwankung in den Energiespeichern von Laststrom und Grundschwingungsfrequenz f0 der Last, sowie der Betriebsart des Stromrichters

- Bei niedrigen Ausgangsfrequenzen

  - Erhöhter Aufwand an Kondensatoren

  - Ggf. erhöhte Sternpunktspannung

  - Ggf. Zusatzstromkomponente im Zweigstrom (Erhöhte Verluste)

  - Große Verzerrung der Ausgangsspannung.

Ein bekannter Nachteil aus dem Stand der Technik beim sogenannten kreisstromfreien Betrieb besteht darin, dass beim M2C die Energieschwankung in den Kondensatoren der Submodule von der Amplitude $\hat{I}_L$ und der

Grundschwingungsfrequenz $f_0$ des Laststromes abhängig ist.

Ohne geeignete Zusatzmaßnahmen ist somit bei $\hat{i}_L$ = *konstant, $U_d$* = *konstant* bei einer Verringerung der Grundschwingungsfrequenz $f_0$ mit einer Zunahme der Energieschwankung in den Submodulkondensatoren zu rechnen.

Dieses technische Problem wird durch die Erfindung gelöst.

Im Folgenden werden stark vereinfachte Betrachtungen am M2C durchgeführt. Zur Beschreibung des realen Betriebsverhaltens sind diese unzureichend, sie genügen aber für den Kern der Erfindungsmeldung. Ziel der Ausführungen ist, den Einfluss der variablen Spannung $U_d$ am Beispiel einer Betriebsart zu zeigen.

Es wird von einem symmetrischen Aufbau des Umrichters ausgegangen, zugehörige Komponenten wie Zweigdrosseln $L_z$ bzw. Submodule (SM) haben identische Parameter. Der Aufbau des Umrichters mit N Submodulen pro Zweig ist in der Figur 2 dargestellt. In dem verwendeten Modell sind die Zweigdrosseln einer Phase nicht magnetisch verkoppelt. Die Argumentationen bzgl. der Energieschwankungen an einem M2C mit magnetisch verkoppelten Zweigdrosseln sind ähnlich und werden daher nicht separat angegeben.

In der Literatur sind verschiedene Verfahren zur Regelung eines M2Cs bekannt. Für diese Beschreibung wird auf keines davon Bezug genommen. Es genügen einfache physikalische Betrachtungen für den stationären Betrieb. Diese beziehen sich lediglich auf die Grundschwingung. Eine Beeinflussung der Gleichtaktspannung durch Modulation der Submodule erfolgt nicht, ferner werden keine zusätzlichen Zweigstromkomponenten eingeprägt. Ferner werden die Spannungsabfälle an den Zweidrosseln $L_z$ vernachlässigt.

Als Betriebsart wird der stationäre symmetrische Betrieb betrachtet. Dieser ist dadurch gekennzeichnet, dass alle 6 Zweige ähnliche Summenspannungen der Module realisieren müssen, welche allerdings zeitlich versetzt sind. Bei symmetrischem Betrieb des Umrichters müssen die oberen und unteren Module einer Phase im zeitlichen Mittel jeweils die Spannung

$$u_{dSM} = \frac{u_d}{2N} \qquad\qquad 1$$

an den Klemmen realisieren. Für die Erzeugung eines Drehfeldes an den Klemmen U, V, W ist weiterhin eine sinusförmige Modulation der Form

$$u_{SinSM} = \pm\frac{\hat{U}_{LN}}{N}\sin(\omega_0 t + \varphi x) \qquad\qquad 2$$

nötig. Damit folgen die an den Klemmen der Submodule zu realisierenden Spannungen zu

$$u_{\mathrm{Kl},1} = \frac{1}{N}\left(\frac{u_\mathrm{d}}{2} - \hat{U}_\mathrm{LN}\sin(\omega_0 t + \varphi_u)\right)$$

$$u_{\mathrm{Kl},2} = \frac{1}{N}\left(\frac{u_\mathrm{d}}{2} + \hat{U}_\mathrm{LN}\sin(\omega_0 t + \varphi_u)\right)$$

$$u_{\mathrm{Kl},3} = \frac{1}{N}\left(\frac{u_\mathrm{d}}{2} - \hat{U}_\mathrm{LN}\sin(\omega_0 t + \varphi_u - \frac{2}{3}\pi)\right)$$

$$u_{\mathrm{Kl},4} = \frac{1}{N}\left(\frac{u_\mathrm{d}}{2} + \hat{U}_\mathrm{LN}\sin(\omega_0 t + \varphi_u - \frac{2}{3}\pi)\right)$$

$$u_{\mathrm{Kl},5} = \frac{1}{N}\left(\frac{u_\mathrm{d}}{2} - \hat{U}_\mathrm{LN}\sin(\omega_0 t + \varphi_u + \frac{2}{3}\pi)\right)$$

$$u_{\mathrm{Kl},6} = \frac{1}{N}\left(\frac{u_\mathrm{d}}{2} + \hat{U}_\mathrm{LN}\sin(\omega_0 t + \varphi_u + \frac{2}{3}\pi)\right) \qquad 3 \text{ bis } 8$$

wobei Spannungsabfälle an den Zweigdrosseln und evtl. vorhandenen Widerständen vernachlässigt werden.

Betrachtet wird eine Last an den Klemmen U, V, W, welche sinusförmige Ströme

$$i_{\mathrm{L}1} = \hat{I}_{\mathrm{L}} \sin(\omega_0 t + \varphi_{\mathrm{iL}})$$

$$i_{\mathrm{L}2} = \hat{I}_{\mathrm{L}} \sin(\omega_0 t + \varphi_{\mathrm{iL}} - \frac{2}{3}\pi)$$

$$i_{\mathrm{L}3} = \hat{I}_{\mathrm{L}} \sin(\omega_0 t + \varphi_{\mathrm{iL}} + \frac{2}{3}\pi)$$

$$9$$

zieht. Die Aufteilung der Lastströme auf die Zweige 1 bis 6 wird als gleichmäßig vorausgesetzt. Für die Ströme in den Zweigen folgt damit

$$i_{\mathrm{z}1} = \frac{1}{3}i_{\mathrm{d}} + \frac{1}{2}i_{\mathrm{L}1}$$

$$i_{\mathrm{z}2} = \frac{1}{3}i_{\mathrm{d}} - \frac{1}{2}i_{\mathrm{L}1}$$

$$i_{\mathrm{z}3} = \frac{1}{3}i_{\mathrm{d}} + \frac{1}{2}i_{\mathrm{L}2}$$

$$i_{\mathrm{z}4} = \frac{1}{3}i_{\mathrm{d}} - \frac{1}{2}i_{\mathrm{L}2}$$

$$i_{\mathrm{z}5} = \frac{1}{3}i_{\mathrm{d}} + \frac{1}{2}i_{\mathrm{L}3}$$

$$i_{\mathrm{z}6} = \frac{1}{3}i_{\mathrm{d}} - \frac{1}{2}i_{\mathrm{L}3}$$

$$10 \text{ bis } 15$$

wobei $i_d$ der Strom am DC-Anschluss ist. Auf Grund des stationären Betriebes ist $\frac{di_d}{dt} = 0$ für den Spannungsabfall über den Drosseln $L_d$ folgt somit $u_{Ld} = 0$.

Auch kann bei praktischen Anwendungen der Spannungsabfall an den Widerständen $R_d$ häufig vernachlässigt werden, so dass im Folgenden von $u_d = U_d$ ausgegangen wird.

Im zeitlichen Mittel wird an jedem der $j$ Submodule eines Zweiges $i$, ($i \in \{1,2,...,6\}, j \in \{1, 2,..., N\}$) die Leistung

$$p_{SM,ij} = u_{Kl,ij} i_{SM,i} = u_{Kl,ij} i_{zi} \qquad\qquad 16$$

umgesetzt. Die nachfolgenden Betrachtungen beziehen sich auf Module des Zweiges 1, sie gelten ähnlich für die Module der übrigen Zweige 2 und 3. An den Modulen des Zweiges 1 werden die Leistungen

$$p_{\mathrm{SM},1j} = \frac{1}{N}\left(\frac{1}{6}U_{\mathrm{d}}i_{\mathrm{d}} - \frac{1}{4}\hat{U}_{\mathrm{LN}}\hat{I}_{\mathrm{L}}\cos(\varphi_{\mathrm{U}} - \varphi_{\mathrm{iL}}) - \frac{1}{3}\hat{U}_{\mathrm{LN}}i_{\mathrm{d}}\sin(\omega_0 t + \varphi_{\mathrm{U}}) \right.$$
$$\left. + \frac{1}{4}U_{\mathrm{d}}\hat{I}_{\mathrm{L}}\sin(\omega_0 t + \varphi_{\mathrm{iL}}) + \frac{1}{4}\hat{U}_{\mathrm{LN}}\hat{I}_{\mathrm{L}}\cos(2\omega_0 t + \varphi_{\mathrm{U}} + \varphi_{\mathrm{iL}})\right)$$

$$17$$

umgesetzt.

Damit die Energie über eine Periode im Energiespeicher des Submoduls konstant bleibt, muss

$$i_{\mathrm{d}} = \frac{3}{2} \frac{\hat{U}_{\mathrm{LN}}}{U_{\mathrm{d}}} \hat{I}_{\mathrm{L}} \cos(\varphi_{\mathrm{U}} - \varphi_{\mathrm{iL}})$$

18

gelten. Mit dieser Bedingung wird Gleichung 17 zu

$$p_{\mathrm{SM},1j} = \frac{\hat{I}_{\mathrm{L}}}{4N} \left( -2\frac{\hat{U}_{\mathrm{LN}}^2}{U_{\mathrm{d}}} \cos(\varphi_{\mathrm{U}} - \varphi_{\mathrm{iL}}) \sin(\omega_0 t + \varphi_{\mathrm{U}}) \right.$$

$$\left. + U_{\mathrm{d}} \sin(\omega_0 t + \varphi_{\mathrm{iL}}) + \hat{U}_{\mathrm{LN}} \cos(2\omega_0 t + \varphi_{\mathrm{U}} + \varphi_{\mathrm{iL}}) \right)$$

19

Um die Diskussion weiter zu vereinfachen wird von einer induktiven Last ausgegangen, d. h. $\varphi_U = \varphi_{iL} + \frac{\pi}{2}$, die folgenden Schlußfolgerungen treffen aber auch auf allgemeine Lastfälle zu.

Der Stromwinkel $\varphi_{iL}$ wird zu $\varphi_{iL} = 0$ festgelegt. Damit folgt nach Gleichung 19

$$p_{\mathrm{SM},1j} = \frac{\hat{I}_{\mathrm{L}}}{4N} \left( U_{\mathrm{d}} \sin(\omega_0 t) - \hat{U}_{\mathrm{LN}} \sin(2\omega_0 t) \right)$$

20

Der Zusammenhang beschreibt den periodischen Energieeintrag in ein Submodul. Dieser ist direkt proportional zum Laststrom $\hat{I}_L$ und führt zu einer periodischen Änderung des Energieinhaltes im Energiespeicher des Submodules. Der Energieinhalt kann durch Integration von Gleichung 20 bestimmt werden,

$$W_{\mathrm{SM},1j} = -\frac{U_{\mathrm{d}}\hat{I}_{\mathrm{L}}}{4N\omega_0} \left( \cos(\omega_0 t) - \frac{1}{2}\frac{\hat{U}_{\mathrm{LN}}}{U_{\mathrm{d}}} \cos(2\omega_0 t) \right) + W_{ij0}$$

21

mit der im Mittel gespeicherten Energie $W_{ij0}$ an dem stationären Arbeitsregime. Der zeitabhängige Anteil des Energieinhaltes ist direkt proportional zum Laststrom und indirekt proportional zur Kreisfrequenz $\omega_0$.

Im Sonderfall $\hat{U}_{LN} \ll \frac{U_d}{2}$ kann Gleichung 21 zu

$$W_{\mathrm{SM},1j} \approx -\frac{U_{\mathrm{d}}\hat{I}_{\mathrm{L}}}{4N\omega_0} \cos(\omega_0 t) + W_{ij0}$$

22

vereinfacht werden. In diesem Fall ist die Amplitude der Energieänderung direkt proportional zur Spannung $U_d$ Dies motiviert, die Spannung $U_d$ nicht konstant, sondern variabel zu gestalten. Dabei kann $U_d$ nicht beliebig variiert werden. Durch den Aufbau des M2Cs ist die maximal realisierbare Leiter-Sternpunktspannung ohne Beeinflussung der Gleichtaktspannung durch Modulation auf

$$0 \le \left| \hat{U}_{LN} \right| \le \frac{1}{2} U_d$$

23

beschränkt. Diese Gleichung kann auch anders interpretiert werden. Bei geforderter Spannung $\hat{U}_{LN}$ muss

$$U_d \geq 2\widehat{U}_{LN} \qquad\qquad 24$$

gelten.

Es bleibt festzuhalten, dass durch Variation der Spannung $U_d$ die Energieschwankung in den Energiespeichern geeignet beeinflusst werden kann. Neben der Reduktion des Stromes $\hat{I}_L$ stellt dies also eine weitere Möglichkeit zur Begrenzung der Energieschwankung in den Energiespeichern bei variabler Kreisfrequenz $\omega_0$ dar. Jedoch ist insbesondere bei Maschinenanwendungen die Reduktion des Stromes $\hat{I}_L$ auf Grund des damit reduzierten Drehmomentes meist nur eingeschränkt möglich.

Erfindungsgemäß wird die Spannung $U_d$ variabel gestaltet gemäß $U_d = U_d(\omega_0)$. Durch geeignete Wahl von $U_d(\omega_0)$ kann die Energieschwankung in den Modulen der Anwendung entsprechend beeinflusst werden.

Als Ansatz wird eine lineare Abhängigkeit der DC-Spannung von der Kreisfrequenz $\omega_0$

$$U_d(\omega_0) = U_{d,n}\frac{\omega_0}{\omega_N} \qquad\qquad 25$$

betrachtet, wobei auch andere Ansätze möglich sind. Dieser lineare Zusammenhang ist in der Praxis nicht für beliebige Kreisfrequenzen $\omega_0$ realisierbar, so dass als Gültigkeitsbereich

$$\text{für}\quad \omega_2 = \omega_N \qquad\qquad \omega_1 < \omega_0 < \omega_2 \qquad\qquad 26$$

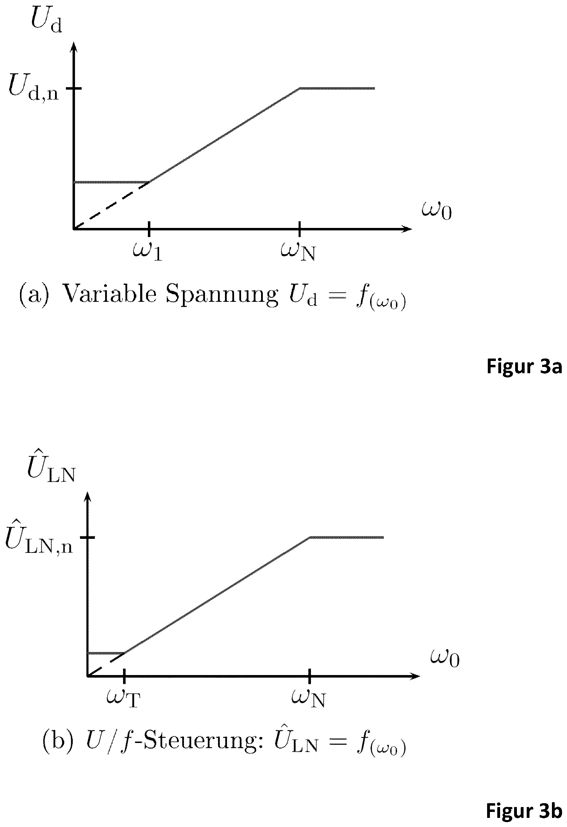

betrachtet werden muss. Die Zusammenhänge sind in der Figur 3a skizziert. Als Last an den Klemmen U, V, W wird ein Motor betrachtet. Um die Betrachtungen zu vereinfachen, wird von U/f-Steuerung der Maschine ausgegangen. Die Abhängigkeit der Leiter-Sternpunktspannung kann mit

$$\widehat{U}_{LN}(\omega_0) = \widehat{U}_{LN,n}\frac{\omega_0}{\omega_N} \qquad\qquad 27$$

angenähert beschrieben werden. Der Verlauf ist in der Figur 3b skizziert. Zur Bestimmung der Energieschwankung in den Energiespeichern der Submodule des Zweiges 1 ist die Integration von Gleichung 19 nötig

$$
\begin{aligned}
w_{\mathrm{SM},1j} = \frac{U_{\mathrm{d}}\hat{I}_{\mathrm{L}}}{4N\omega_0}\bigg( &-\cos(\omega_0 t + \varphi_{\mathrm{iL}}) + \frac{1}{4}\hat{u}_{\mathrm{LN}}\sin(2\omega_0 t + \varphi_U + \varphi_{\mathrm{iL}}) \\
&+ \frac{1}{2}\hat{u}_{\mathrm{LN}}^2\cos(\varphi_U - \varphi_{\mathrm{iL}})\cos(\omega_0 t + \varphi_U)\bigg) + W_{ij0},
\end{aligned}
\qquad 28
$$

wobei die Amplitude $\widehat{U}_{LN}$ durch die bezogene Größe $\hat{u}_{LN}$

$$\hat{u}_{LN} = 2\frac{\widehat{U}_{LN}}{U_d} \qquad\qquad 29$$

ausgedrückt wird. Einsetzen von Gleichung 25 und 27) in Gleichung 28 liefert

$$
\begin{aligned}
w_{\mathrm{SM},1j} = \frac{U_{\mathrm{dn}}\hat{I}_{\mathrm{L}}}{4N\omega_{\mathrm{N}}}\bigg( &-\cos(\omega_0 t + \varphi_{iL}) + \frac{1}{4}\hat{u}_{\mathrm{LN,n}}\sin(2\omega_0 t + \varphi_U + \varphi_{iL}) \\
&+ \frac{1}{2}\hat{u}_{\mathrm{LN,n}}^2\cos(\varphi_U - \varphi_{\mathrm{iL}})\cos(\omega_0 t + \varphi_U)\bigg) + W_{ij0},
\end{aligned}
\qquad 30
$$

mit

$$\hat{u}_{LN,n} = 2\,\frac{\hat{U}_{LN,n}}{U_{d,n}}.$$

Daraus folgt, dass die Amplitude der Energieschwankung in den Submodulen für Kreisfrequenzen $\omega_0$

$$\omega_1 < \omega_0 < \omega_2$$

bei $\hat{I}_L$, $\varphi_U$, $\varphi_{iL}$ gleich konstant unabhängig von der Kreisfrequenz $\omega_0$ ist.

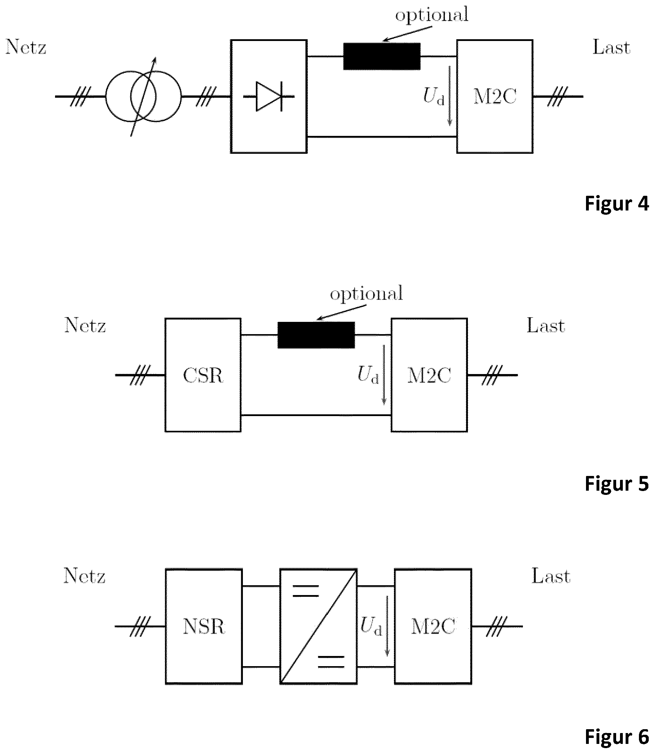

Nachfolgend werden Schaltungsbeispiele zur Variation der Spannung Ud vorgestellt. In den vorangegangen Betrachtungen wurde der Effekt einer variablen Spannung $U_d$ beschrieben. In den Figuren 4, 5 und 6 sind exemplarisch einige Schaltungsprinzipien skizziert, welche eine variable Spannung $U_d$ ermöglichen. Es wird kein Anspruch auf Vollständigkeit erhoben. Eine Diskussion von Vor-/ Nachteilen der Realisierungsmöglichkeiten erfolgt nicht.

Wird die Spannung $U_d$ über einen Diodengleichrichter bereitgestellt, so kann eine variable Spannung $U_d$ durch Änderung der Eingangsspannung des Gleichrichters erfolgen. Dies ist in Figur 4 dargestellt.

Ein Schaltungsbeispiel zur Variation der Spannung $U_d$, welches auch ohne einen Transformator betrieben werden kann, ist in der Figur 5 gezeigt. Die variable Spannung $U_d$ wird in diesem Fall über einen *current-source-rectifier* (CSR) mit ein-, bzw. ein- und ausschaltbaren Halbleitern realisiert.

Auch sind Schaltungskombinationen nach Figur 6 möglich. Hierbei wird die Gleichspannung des netzseitigen Stromrichters (NSR) über einen DC/DC-Wandler nochmals angepasst.2

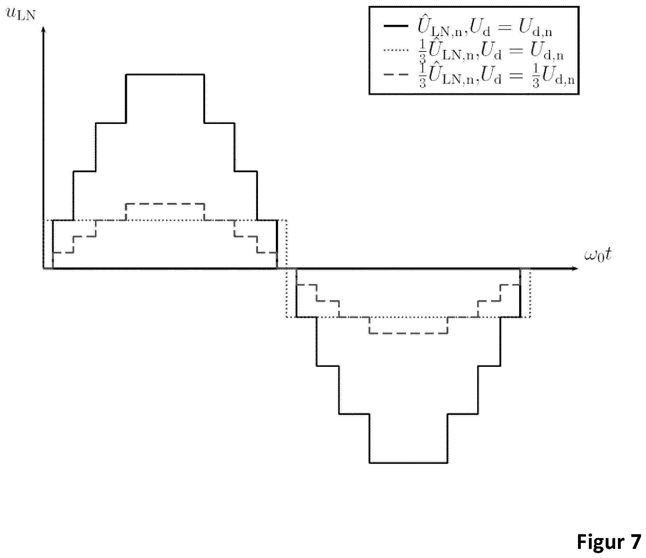

Bei Multilevel-Umrichtern ist bekannt, dass die Qualität der Ausgangsspannung mit abnehmenden Aussteuergrad abnimmt. Zur Illustration wird auf Figur 7 verwiesen (durchgezogene, gestrichelte und punktierte Linien).

Eine Verbesserung der Spannungsqualität kann durch unterschiedliche Spannungslevel der einzelnen Stufen, den Submodulen, erreicht werden. Diese unterschiedlichen Spannungslevel der Stufen können durch unterschiedliche Spannungen in den Submodulkondensatoren realisiert werden. Unter Modularitätspunkten ist dieser Lösungsansatz eher ungünstig.

Eine weitere Möglichkeit zur Erhöhung der Spannungsqualität ist das Anpassen der mittleren Submodulspannung an die Spannung $U_d$ über Änderung der in den Energiespeichern der Submodule gespeicherten Energie.

Das Anpassen der mittleren Spannung entspricht einer veränderten "Stufenhöhe" der Ausgangsspannung. In Figur 7 wird der sich einstellende Ausgangsspannungsverlauf bei angepasster Submodulkondensatorspannung durch die gestrichelte Linie skizziert.

Die Reduktion der Energieschwankung führt zur Minimierung des Submodulkondensatoraufwands, einer Vereinfachung der Steuerung und Regelung des M2Cs, einer Verringerung der Gesamtverluste, zur Vermeidung hoher Aussteuerungen der Gleichtaktspannung und/oder zusätzlicher Zweigstromkomponenten (Kreisströme) sowie zu einer Erweiterung der Anwendungsgebiete des M2Cs beispielsweise für einen Dauerbetrieb bei kleinen Frequenzen.

Zusätzlicher Vorteil ist die Anpassung der Kondensatorspannung an die variable Spannung $U_d$. Dies ermöglicht eine höhere Qualität der Ausgangsspannung bei geringerer Ausgangsspannungsamplitude mit den bereits vorhandenen Submodulen. Zusätzliche Redundanzen sind möglich, aber nicht notwendig.

## Abkürzungen

| | |
|---|---|
| $f_0$ | Grundschwingungsfrequenz des Laststroms oder Arbeitsfrequenz des Stromrichters |
| $f_N$ | Nennfrequenz des Umrichters |
| $i_d$ | Strom, welcher über den DC-Zwischenkreis fließt |
| $\hat{I}_L$ | Laststrom (Amplitude) |
| $i_1$, $i_2$ | Kreisströme im Umrichter, d. h. Stromkomponenten welche weder über die DC-Quelle noch über die Last fließen |
| m | Phasenanzahl des Umrichters |
| M | Drehmoment |
| $M_N$ | Nenn-Drehmoment |
| N | Anzahl der Submodule pro Zweig |
| $U_d$ | DC-Spannung am Anschlusspunkt des Stromrichters |
| $\hat{U}_{LL}$ | Verkettete Lastspannung (Amplitude) |
| $\hat{U}_{LN}$ | Leiter-Sternpunktspannung (Amplitude) |

$u_X$        Gleichtaktspannung

p        Polpaarzahl

Zweig     Reihenschaltung von N Submodulen, einer Drossel sowie evtl. Widerstände. Zur Speisung einer dreiphasigen Last sind 2*3 = 6 Zweige notwendig.

$u_a$        Ausgangspannung des Stromrichters oder Klemmenspannung

$\omega$        beliebige Kreisfrequenz

**Patentansprüche**

1. Verfahren zur Erzeugung einer frequenzveränderlichen Ausgangsspannung $u_a$ mittels eines Modularen Multilevel-Stromrichters (M2C), wobei der Stromrichter durch Zu- und Abschalten von Submodulen eine durch diskrete Spannungsstufen angenäherte sinusförmige Wechselspannung mit einer ersten Kreisfrequenz $\omega_0$, welche zwischen einer Nullfrequenz $\omega_{0,min}$ und einer zweiten Kreisfrequenz $\omega_{0,max}$ liegt, aus einer Eingangsspannung $U_d$ erzeugt, wobei jedes dieser Submodule einen Kondensator aufweist, **dadurch gekennzeichnet, dass** die Eingangsspannung $U_d$ in Abhängigkeit von der Kreisfrequenz $\omega_0$ im Bereich zwischen einer unteren Kreisfrequenz $\omega_1$, welche gleich oder größer als die Nullfrequenz $\omega_{0,min}$ ist, und einer Kreisfrequenz $\omega_2$, zur Verringerung eines Kondensatoraufwands im Stromrichter, derart gesteuert oder geregelt wird, dass sie mit ansteigender Frequenz ansteigt.

2. Verfahren nach Anspruch 1, **dadurch gekennzeichnet, dass** das Zu- und Abschalten mindestens eines Submoduls stufenweise erfolgt.

3. Verfahren nach Anspruch 1 oder 2, **dadurch gekennzeichnet, dass** das Zu- und Abschalten mindestens eines Submoduls durch PWM-Modulation gesteuert erfolgt.

4. Verfahren nach einem der Ansprüche 1 bis 3, **dadurch gekennzeichnet, dass** die Spannung $U_d$ in Abhängigkeit der Kreisfrequenz $\omega_0$ monoton ansteigt.

5. Verfahren nach einem der Ansprüche 1 bis 4, **dadurch gekennzeichnet, dass** die Spannung $U_d$ in Abhängigkeit der Kreisfrequenz $\omega_0$ zumindest in einem Intervall linear ansteigt.

6. Verfahren nach einem der Ansprüche 1 bis 4, **dadurch gekennzeichnet , dass** die Eingangsspannung $U_d$ in Abhängigkeit von der Kreisfrequenz $\omega_0$ zumindest in einem Intervall nichtlinear ansteigt.

7. Verfahren nach einem der Ansprüche 1 bis 6, **dadurch gekennzeichnet, dass** die Eingangsspannung $U_d$ in zusätzlicher Abhängigkeit von einem Laststrom und/oder einer Klemmenspannung oder Lastspannung des M2Cs und/oder einem Drehmoment einer mit der Ausgangsspannung $u_a$ angesteuerten Maschine gesteuert oder geregelt wird.

8. Verfahren nach einem der Ansprüche 1 bis 7, **dadurch gekennzeichnet, dass** die Eingangsspannung $U_d$ in zusätzlicher Abhängigkeit von einer Modulation der Gleichtaktspannung der Last gesteuert oder geregelt wird.

9. Verfahren nach einem der Ansprüche 1 bis 8, **dadurch gekennzeichnet, dass** die Eingangsspannung $U_d$ in zusätzlicher Abhängigkeit von einer Energieverschiebung zwischen Energiespeichern des Stromrichters durch zusätzliche Stromkomponenten in den Zweigströmen des Stromrichters gesteuert wird.

10. Anordnung zur Durchführung des Verfahrens nach Anspruch 1 zur Erzeugung einer frequenzveränderlichen Ausgangsspannung $u_a$ aus einer Eingangsspannung $U_d$ mittels eines modular aufgebauten Multilevel-Stromrichters (M2C), bei welcher für jede zu erzeugende Ausgangsspannung ein Zweig, bestehend aus einer Reihenschaltung von mehreren Submodulen, angeordnet ist, wobei jedes dieser Submodule einen Kondensator aufweist, **dadurch gekennzeichnet, dass** dem Stromrichter, zur Verringerung eines Kondensatoraufwands im Stromrichter, eingangsseitig Mittel zur Variation der Eingangsspannung $U_d$ vorgeschaltet sind.

11. Anordnung nach Anspruch 10, **dadurch gekennzeichnet, dass** das Mittel zur Variation der Eingangsspannung $U_d$ aus einem stellbaren Transformator und einem Gleichrichter besteht.

12. Anordnung nach Anspruch 10, **dadurch gekennzeichnet, dass** das Mittel zur Variation der Eingangsspannung $U_d$ aus einem Stromrichter mit Stromzwischenkreis besteht.

**13.** Anordnung nach Anspruch 10, **dadurch gekennzeichnet, dass** das Mittel zur Variation der Eingangsspannung $U_d$ aus einem netzseitigen Stromrichter und einem DC/DC-Wandler besteht.

**14.** Anordnung nach Anspruch 10, **dadurch gekennzeichnet, dass** das Mittel zur Variation der Eingangsspannung $U_d$ aus einem Stromrichter mit Spannungszwischenkreis besteht.

**15.** Anordnung nach Anspruch 14, **dadurch gekenn- z e i c h n e t , dass** der Stromrichter mit Spannungszwischenkreis, aus einem 2-Level-Umrichter, 3-Level-NPC, 3-Level-Flying-Capacitor oder Multilevel Flying Capacitor Voltage Source Converter oder Active Neutral Point Clamped Multilevel Converter (ANPC) besteht.

**Claims**

**1.** Method for the generation of a frequency-variable output voltage $u_a$ by means of a modular multilevel power converter (MC2), wherein the power converter, by switching sub-modules on and off, generates an approximately sinusoidal alternating voltage, through discrete voltage steps, with a first angular frequency $\omega_0$, which lies between a zero frequency $\omega_{0,min}$ and a second angular frequency $\omega_{0,max}$, from an input voltage $U_d$, wherein each of these sub-modules has a capacitor,
**characterised in that** the input voltage $U_d$ is controlled or regulated as a function of the angular frequency $\omega_0$ in the region between a lower angular frequency $\omega_1$, which is equal to or greater than the zero frequency $\omega_{0,min}$, and an angular frequency $\omega_z$, for the reduction of a capacitor demand in the power converter in such a way that it increases as the frequency increases.

**2.** Method according to claim 1, **characterised in that** the switching on and off of at least one sub-module takes place in stages.

**3.** Method according to claim 1 or 2, **characterised in that** the switching on and off of at least one sub-module is controlled by PWM modulation.

**4.** Method according to one of claims 1 to 3, **characterised in that** the voltage $U_d$ increases monotonously as a function of the angular frequency $\omega_0$.

**5.** Method according to one of claims 1 to 4, **characterised in that** the voltage $U_d$ increases linearly at least in one interval as a function of the angular frequency $\omega_0$.

**6.** Method according to one of claims 1 to 4, **characterised in that** the input voltage $U_d$ increases non-linearly at least in one interval as a function of the angular frequency $\omega_0$.

**7.** Method according to one of claims 1 to 6, **characterised in that** the input voltage $U_d$ is controlled or regulated in an additional dependency on a load current and/or a terminal voltage or load voltage of the M2C and/or a torque of a machine controlled with the output voltage $u_a$.

**8.** Method according to one of claims 1 to 7, **characterised in that** the input voltage $U_d$ is controlled or regulated in an additional dependency on a modulation of the common mode voltage of the load.

**9.** Method according to one of claims 1 to 8, **characterised in that** the input voltage $U_d$ is controlled in an additional dependency on an energy shift between energy storage devices of the power converter through additional current components in the branch currents of the power converter.

**10.** Assembly for performing the method according to claim 1 for the generation of a frequency-variable output voltage $u_a$ from an input voltage $U_d$ by means of a modularly constructed multilevel power converter (M2C), with which for each output voltage to be generated a branch is arranged, comprising a series circuit of several sub-modules, wherein each of these sub-modules has a capacitor, **characterised in that** in order to reduce a capacitor demand in the power converter means for the variation of the input voltage $U_d$ are provided upstream of the power converter on the input side.

**11.** Assembly according to claim 10, **characterised in that** the means for the variation of the input voltage $U_d$ consists of an adjustable transformer and a rectifier.

**12.** Assembly according to claim 10, **characterised in that** the means for the variation of the input voltage $U_d$ consists of a power converter with an intermediate circuit.

**13.** Assembly according to claim 10, **characterised in that** the means for the variation of the input voltage $U_d$ consists of a mains-side power converter and a DC/DC converter.

**14.** Assembly according to claim 10, **characterised in that** the means for the variation of the input voltage $U_d$ consists of a power converter with an intermediate voltage circuit.

**15.** Assembly according to claim 14, **characterised in that** the power converter with intermediate voltage circuit consists of a 2-level converter, 3-level NPC, 3-level flying capacitor or multilevel flying capacitor voltage source converter or active neutral point clamped multi-level converter (ANPC).

**Revendications**

**1.** Procédé de production d'une tension $u_a$ de sortie de fréquence variable au moyen d'un convertissement (M2C) modulaire multiniveaux, le convertisseur produisant, à partir d'une tension $U_d$ d'entrée, par connexion et déconnexion de sous-modules, une tension alternative approximativement sinusoïdale par des degrés de tension discrets, ayant une première pulsation $\omega_0$ qui est comprise entre une pulsation $\omega_{0,min}$ nulle et une deuxième pulsation $\omega_{0,max}$ chacun de ces sous-modules ayant un condensateur, **caractérisé en ce que** l'on commande ou régule la tension $U_d$ en fonction de la pulsation $\omega_0$ dans la plage comprise entre une pulsation $\omega_1$ inférieure, supérieure ou égale à la pulsation $\omega_{0,min}$ nulle et une pulsation $\omega_2$, pour diminuer le coût du condensateur dans le convertisseur, de manière à ce qu'elle augmente au fur et à mesure qu'augmente la pulsation.

**2.** Procédé suivant la revendication 1, **caractérisé en ce que** la connexion et la déconnexion d'au moins un sous-module s'effectuent par degré.

**3.** Procédé suivant la revendication 1 ou 2, **caractérisé en ce que** la connexion et la déconnexion d'au moins un sous-module s'effectuent de manière commandée par une modulation PWM.

**4.** Procédé suivant l'une des revendications 1 à 3, **caractérisé en ce que** la tension $U_d$ croît de manière monotone en fonction de la pulsation $\omega_0$.

**5.** Procédé suivant l'une des revendications 1 à 4, **caractérisé en ce que** la tension $U_d$ d'entrée augmente linéairement, au moins dans un intervalle, en fonction de la pulsation $\omega_0$.

**6.** Procédé suivant l'une des revendications 1 à 5, **caractérisé en ce que** la tension $U_d$ d'entrée augmente non linéairement, au moins dans un intervalle, en fonction de la pulsation $\omega_0$.

**7.** Procédé suivant l'une des revendications 1 à 6, **caractérisé en ce que** l'on commande ou l'on régule la tension $U_d$ d'entrée en fonction supplémentairement d'un courant de charge et/ou d'une tension aux bornes ou d'une tension de charge du M2C et/ou d'un couple d'une machine excitée par la tension $U_d$ de sortie.

**8.** Procédé suivant l'une des revendications 1 à 7, **caractérisé en ce que** l'on commande ou l'on régule la tension $U_d$ d'entrée en fonction supplémentairement d'une modulation de la tension en phase de la charge.

**9.** Procédé suivant l'une des revendications 1 à 8, **caractérisé en ce que** l'on commande la tension $U_d$ d'entrée en fonction supplémentairement d'un décalage d'énergie entre des accumulateurs d'énergie du convertisseur, par des composants de courant supplémentaires dans les courants de branche du convertisseur.

**10.** Agencement pour effectuer le procédé suivant la revendication 1 de production d'une tension $u_a$ de sortie de fréquence variable à partir d'une tension $U_d$ d'entrée, au moyen d'un convertisseur (M2C) multiniveaux formé modulairement, dans lequel il est prévu, pour chaque tension de sortie à produire, une branche constitué d'un circuit série de plusieurs sous-modules, chacun de ces sous-modules ayant un condensateur, **caractérisé en ce qu'**en amont du convertisseur, il est monté, pour diminuer le coût du condensateur dans le convertisseur, un moyen du côté de l'entrée pour faire varier la tension $U_d$ d'entrée.

**11.** Agencement suivant la revendication 10, **caractérisé en ce que** le moyen pour faire varier la tension $U_d$ d'entrée consiste en un transformateur réglable et en un redresseur.

**12.** Agencement suivant la revendication 10, **caractérisé en ce que** le moyen pour faire varier la tension $U_d$ d'entrée consiste en un convertisseur ayant un circuit intermédiaire de courant.

**13.** Agencement suivant la revendication 10, **caractérisé en ce que** le moyen pour faire varier la tension $U_d$ d'entrée consiste en un convertisseur du côté du réseau et en un transducteur courant continu/courant continu.

**14.** Agencement suivant la revendication 10, **caractérisé en ce que** le moyen pour faire varier la tension $U_d$ d'entrée consiste en un convertisseur ayant un circuit intermédiaire de tension.

**15.** Agencement suivant la revendication 14, **caractérisé en ce que** le convertisseur à circuit intermédiaire de tension consiste en un convertisseur 2 niveaux, un NPC 3 niveaux, un Flying-Capacitor 3 niveaux ou un Flying-Capacitor Voltage Source Converter ou en un Active Neutral Point Clamped Multilevel Converter (ANPC).

**Figur 1**

**Figur 2**

(a) Variable Spannung $U_{\mathrm{d}} = f_{(\omega_0)}$

**Figur 3a**

(b) $U/f$-Steuerung: $\hat{U}_{\mathrm{LN}} = f_{(\omega_0)}$

**Figur 3b**

Netz

optional

Last

$U_\mathrm{d}$   M2C

**Figur 4**

Netz

optional

Last

CSR   $U_\mathrm{d}$   M2C

**Figur 5**

Netz

Last

NSR   $U_\mathrm{d}$   M2C

**Figur 6**

**Figur 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BIN WU.** High-Power Converters And AC Drives. John Wiley & Sons Inc, 2006
- **R. MARQUARDT ; A. LESNICAR ; J. HILDINGER.** Modulares Stromrichterkonzept für Netzkupplungsanwendung bei hohen Spannungen. *ETG-Fachtagung,* 2002
- **R. MARQUARDT ; A. LESNICAR.** New Concept for High Voltage Modular Multilevel Converter. *Proc. of IEEE-Power Electronics Specialists Conference (PESC),* 2004
- Low output frequency operation of the modular multi-level converter. **A. J. KORN ; M. WINKELNKEMPER ; P. STEIMER.** Energy Conversion Congress and Exposition (ECCE). IEEE, September 2010, 3993-3997
- PWM control and experiment of modular multilevel converters. **M. HAGIWARA ; H. AKAGI.** Power Electronics Specialists Conference (PESC) 2008, PESC 2008. IEEE, 154-161
- **R. MARQUARDT ; A. LESNICAR ; J. HILDINGER.** Modulares Stromrichterkonzept für Netzkupplungsanwendung bei hohen Spannungen. *ETG-Fachtagung, Bad Nauheim,* 2002
- **R. MARQUARDT ; A. LESNICAR.** New Concept for High Voltage - Modular Multilevel Converter. *Proc. of IEEE-Power Electronics Specialists Conference (PESC),* 2004
- Low output frequency operation of the modular multi-level converter. **A. J. KORN ; M. WINKELNKEMPER ; P. STEIMER.** Energy Conversion Congress and Exposition (ECCE). IEEE, September 2010, 3993-3997